# EUROPEAN PATENT SPECIFICATION

(11) **EP 0 858 536 B1**
(45) Date of publication and mention of the grant of the patent: **29.05.2002**
(21) Application number: 96937628.4
(22) Date of filing: 31.10.1996
(51) Int. Cl.: E02F 9/22

(54) **ARRANGEMENT FOR THE HYDRAULIC SYSTEM IN A WHEEL LOADER**
ZUSATZVORRICHTUNG FÜR DAS HYDRAULIKSYSTEM IN EINEM RADLAGER
DISPOSITIF ANNEXE DU SYSTEME HYDRAULIQUE D'UNE CHARGEUSE SUR ROUES

(30) Priority: 01.11.1995 SE 9503860
(43) Date of publication of application: 19.08.1998
(73) Proprietor: Hultdins System AB, 930 70 Mala (SE)
(72) Inventor: Hultdins System AB, 930 70 Mala (SE)
(74) Representative: Onn, Thorsten
(86) International application number: SE9601399
(87) International publication number: WO9716607

(56) References cited:
- DK-B- 124 090
- US-A- 5 195 864
- PATENT ABSTRACTS OF JAPAN, Vol. 096, No. 005; & JP,A,08 013 546 (SHIN CATERPILLAR MITSUBISHI) 16-01-96.

## Description

The present invention relates to improved damping of and the provision of a controllable floating position of wheel loader arms.

Wheel loaders equipped with hydraulically manoeuvered arms for carrying loads in a loader implement are very likely to swing vigorously when moving over uneven ground.

In order to solve this problem, there are used hydraulic reservoirs or accumulators which are connected to the hydraulic cylinders that lift the load on that side which is pressurized when lifting, this side being referred to here as the plus side. In order to achieve a satisfactory damping effect, that side of the lifting cylinders which is not pressurized during a lift, here referred to as the minus side, exhibits a certain degree of vacuum. This partial vacuum is obtained by connecting that side of the lift cylinders that is not pressurized in the lift to a tank, meaning that the implement, e.g. a bucket or shovel, cannot be moved down into abutment with the ground, for instance. Despite these measures, which are disadvantageous to the user, there remains a resistance which results in an impaired damping effect.

U.S. 5,195,864 discloses an example of an earlier known technique in the damping of loaders in such working machines. According to the U.S. specification, damping is achieved with the aid of a pressure accumulator connected to the fluid line that connects with the plus side of the hydraulic cylinder. In order to make damping possible, it is necessary to allow the lifting arms to swing upwards in the absence of any resistance, and hence the hydraulic system is adapted to be evacuated directly to the tank from the fluid line connected to the minus side of the hydraulic system. The arrangement includes a control system which performs a control function with the aid of magnetic valves, when the accumulator and the evacuation function shall be connected to and separated/disengaged from the hydraulic cylinders.

According to this U.S. patent specification, as the machine is moved over rough or uneven ground, the control system functions to open the magnetic valve to the accumulator on the one hand, so as to take-up those variations in pressure that occur in the fluid line connected to the plus side of the cylinder, and to evacuate the system from the minus side of the hydraulic cylinder on the other hand. Evacuation is intended to reduce the build-up of pressure on the minus side of the cylinder, therewith reducing any hinderance in the system to the upward swinging of the loader arm. A significant part of this evacuated fluid is re-sucked into the cylinder, however, as the arm again swings downwards.

Since the swinging movements are rapid, there is also generated a flow resistance in the conduit leading to the tank in known hydraulic systems, this conduit often having a long length, and hence the major part of the swinging hinderance remains.

The control system functions to close the magnetic valves to the accumulator and to the evacuation facility in other operating conditions.

Because the pressure in the lifting cylinder normally changes during the time in which the magnetic valve is held closed, fluid will flow into or out of the hydraulic accumulator so as to equalize the pressures when said valve is reopened, meaning, in turn, that the arms will move slightly upwards or downwards involuntarily.
To prevent this, the known system is provided with a servo hydraulic system which adapts the pressure in the damping accumulator to the pressure on the plus side of the lifting cylinder.

Operators who find such complicated control systems undesirable will use those arrangements that utilize a permanently open evacuation facility. These latter arrangements have the disadvantage that a loader implement or accessory, such as a bucket or shovel, cannot be placed against the ground or like surface, since attempts to increase pressure on the minus side of the hydraulic valve are negated directly by evacuation of the system.

Hitherto developments have been directed towards finding improved control systems for the various valves which control the system when damping shall be activated and when it shall be inactivated. Our invention, on the other hand, takes another starting point and direction.

The object of the present invention is to provide an arrangement which will provide an improved damping effect on the lifting arms of a loader while retaining the possibility of bring thee load supporting arms into abutment with the ground or like surface.

This object is achieved with the arrangement defined in the following independent Claim.

We have devised an arrangement which will provide improved damping and which will allow implement to be placed on the ground without requiring the provision of expensive control systems. In accordance with the invention, the arrangement includes a constricted or throttled evacuation opening and a check valve function in connection therewith.

This results in evacuation of the minus side of the cylinder necessary for damping, wherein said minus side can be constantly coupled-in and wherein no complicated control system is required.

The arrangement evacuates hydraulic fluid to a limited extent, i.e. permits a limited fluid volume to be "pumped" out from the minus side as the loader swings upwards, so as to generate a vacuum. When the loader then swings downwards, after having caused a volume of fluid to be "pumped out" from the minus side, and passes its pressure equilibrium position - relates to pressure equilibrium on the plus and the minus side respectively - the accumulator, which is connected to the plus side, will be assisted in the damping process by a subpressure or partial vacuum generated on the minus side of the hydraulic cylinder. This enables the check valve function which prevents reflux of fluid evacuated from the minus side of the cylinder. In the following, upwardly directed swinging movement, further fluid is pumped out and the pressure build-up on the minus side is thus reduced successively until the build-up of pressure ceases.

The pressure build-up on the minus side of the hydraulic cylinder necessary to enable the loader implement to be placed against the ground or like surface is made possible by the throttled evacuation and can be regulated by suitable dimensioning of the throttle. A particularly preferred throttling facility is one in which the evacuation process will provide a flow-throttling resistance which permits a pressure build-up on the minus side of the cylinder of sufficient magnitude to ease the load slightly on the front wheels of a loader provided with a front-mounted working implement when pumping in sufficient fluid, e.g. at high engine speeds.

Throttling in combination with the function of the check valve provides very advantageous effects with regard to damping the swinging motion of the loader. Damping is optimal when the minus side of the cylinder is empty of fluid, i.e. when upward movement of the loader arm meets with no resistance. Throttling in conjunction with the check valve function permits fluid to be pumped from the minus side and therewith successive damping that will approach an optimal damping effect with each swinging movement.

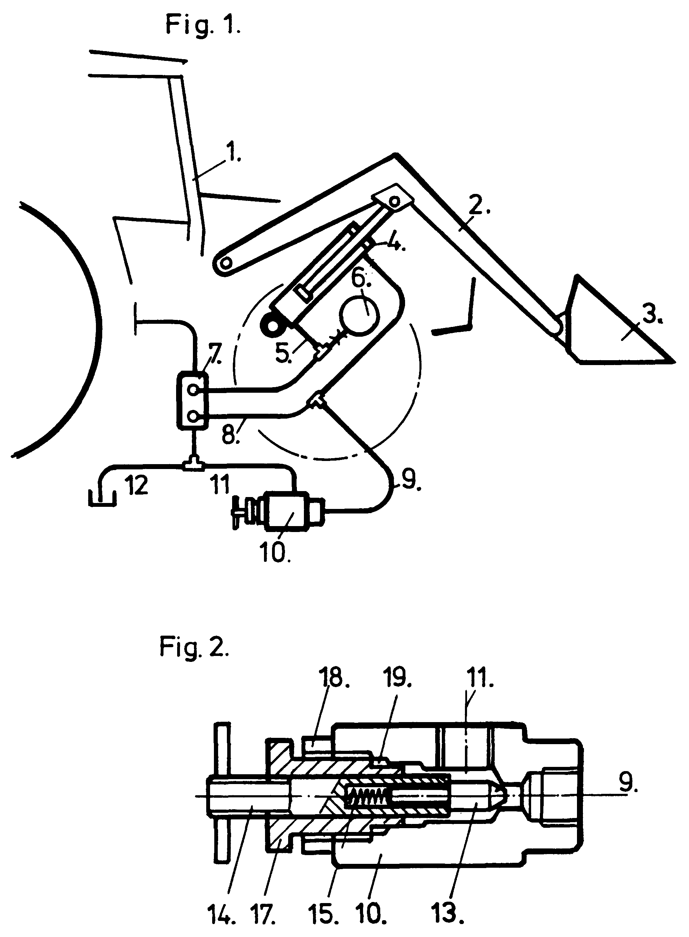

The invention will now be described with reference to an exemplifying embodiment thereof and also with reference to the accompanying drawings, in which **Fig. 1** illustrates schematically the hydraulic system of a loader; **Fig. 2** illustrates schematically a valve that provides a desired function in accordance with one embodiment of the present invention; and **Figs. 3, 4, 5** are graphs illustrating the hydraulic pressure in the lifting cylinder as the loader moves over a rough or raised surface, wherein Fig. 3 shows the lifting cylinder non-dampened, Fig. 4 shows the lifting cylinder dampened and filled with oil, and Fig. 5 shows the lifting cylinder dampened with the non-loaded side of the cylinder partly devoid of oil.

A tractor or a machine 1 having arms 2 that are used to lift a load 3 with the aid of hydraulic cylinders 4 has an hydraulic line 5 which is pressurized as the load is lifted and which has a damping means 6 connected thereto. The hydraulic cylinder 4 is operated by means of an hydraulic valve 7 via the line 5 and an hydraulic line 8, wherein the line 8 is pressurized when wishing to bring the arms into abutment with the ground. The line 8 has connected thereto a line 9 which leads to a valve 10, from which an hydraulic line 11 extends to a return line 12 which, in turn, extends from the operating valve 7 and which is connected directly to an hydraulic tank and is therewith pressureless at low flow rates.

The valve 10 includes a valve body 13 which is conical at one end and the other end of which is narrower than said one end and extends into a hole in a setting screw 14. Mounted on the bottom of the setting screw hole is a spring 15 which biases the valve member 13 outwards into abutment with the inlet from the line 9, said inlet having the form of a valve seating which seals against the valve member 13 when said valve member lies against said seat. The setting screw 14 is mounted in a sleeve 17 so as to enable the screw to be screwed through a limited distance to the left of the Figure and therewith to enable the valve member 13 to move away from the valve seat at the line 9.

The sleeve 17 can be locked in a selected position with the aid of a stop nut 18. Leakage of oil from the valve is prevented by a seal 19.

When the loader or tractor is driven over a rough or uneven surface, the load will be caused to swing and therewith result in variations in pressure on the plus side of the hydraulic cylinder 4, these pressure variations propagating to the damper accumulator 6 through the line 5. In order to achieve a good damping effect, the load 3, and therewith the arms 2, shall be permitted to move upwards and downwards in relation to the machine during controlled braking.

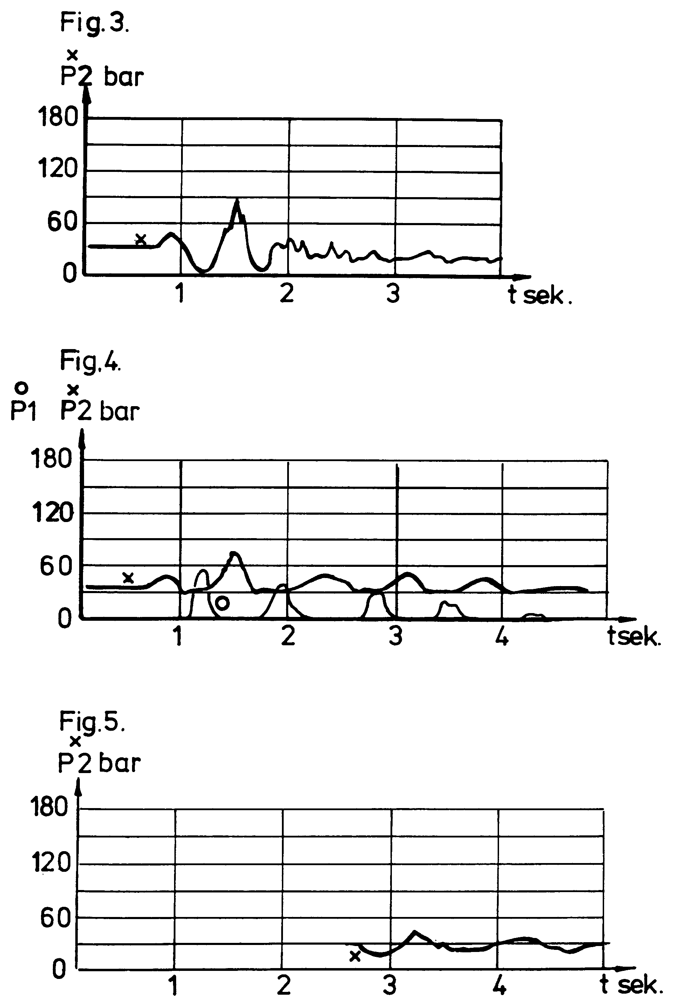

The hydraulic cylinder 4 is normally filled with oil when manoeuvering the hydraulic cylinder 4, even on the minus side, which prevents the arms, and therewith the cylinder 4, moving upwards. Since the gas in the damping accumulator 6 is partially compressed, only the downwardly directed part of the arm swinging motion will result in the flow of hydraulic medium in the line 5 to the damping accumulator 6 and therewith dampen movement of the arm. Upward swinging of the arm 2 will solely result in an increase in pressure in the line 8 without damping the movement, as illustrated by the measuring curve in Fig. 4 which shows pressure with the valve 10 closed. The pressure in the line 5 is shown by the curve marked X, while the pressure in the line 8 is shown by the curve marked O.

The provision of a valve 10 which connects to the minus side of the hydraulic cylinder 4 - via the line 9 - and to the tank line 12 - the line 11 - with the intention of permitting oil to pass from the line 8 to the tank line 12 but not from the tank line 12 to the line 8, results in a given volume of oil being pumped successively from the minus side of the cylinder 4 to the tank line 12 as the arm moves up and down.

When the minus side of the hydraulic cylinder 4 is pressureless and only partially filled with oil, the damping accumulator 6 can be emptied and filled both beneath and above the equilibrium pressure in the line 8 corresponded by a given load 3, as illustrated by the pressure curve in Fig. 5. The pressure curves in Figs. 3, 4 and 5 show pressure measured under the same conditions but with Fig. 3 showing pressure changes when the damper accumulator 6 is disengaged, Fig. 4 showing pressure changes when the minus side of the hydraulic cylinder 4 is completely filled with oil, and Fig. 5 showing pressure changes when the minus side of the hydraulic cylinder 4 is partially empty.

When the setting screw 14 is unscrewed until stopped by the sleeve 17, which is thereafter screwed-in until the valve member 13 throttles the oil supply from the line 9, the line 8 can be pressurized and the arm 2 therewith drawn down with a large oil supply from the valve 7 to the line 8.

When a partial vacuum is generated in the line 9, oil will be prevented from passing from the line 11 as a result of the spring 15 pressing the valve member 13 against the seating on the line 9. When the pressure in the line 11 is higher than the pressure in the line 9, the valve member 13 is urged hydraulically against the valve seat on the line 9. Communication between the lines 9 and 11 can be stopped completely by fully screwing in the setting screw 14 and returning the screw to the earlier set position in which the screw 14 was unscrewed until stopped by the sleeve 17, which is locked by a lock nut 18.

Maximum effect can be achieved with a damping accumulator 16 with the aid of an inventive arrangement, when such a damping accumulator is coupled to the lift cylinder 4 of a mechanical loader.

The arrangement also enables the arms 2 to be brought into abutment with the ground or like surface, with a pressure force that can be regulated by the setting screw 14 and the manoeuvering valve 7 in combination. Because the downwardly acting pressure force is regulated continuously by the flow from the valve 7 and ceases when the flow ceases, distribution of pressure forces acting between a tool or implement coupled to the arm 2 and the drive wheel can be regulated continuously, which is highly beneficial when clearing snow, levelling and grading road surfaces, for instance.

## Claims

1. An arrangement for improving damping of and achieving a controllable floating position of the load carrying arms of a mechanical loader, wherein at least one hydraulic lifting cylinder (4) and a cylinder manoeuvering hydraulic system are adapted for manoeuvering the arm (2), wherein the arrangement includes an hydraulic accumulator (6) connected to the pressurized side, the plus side (5), of the lifting cylinder (4) when lifting a load, and an evacuation line is connected to the other side, the minus side (8) of the lifting cylinder (4) for evacuating hydraulic fluid to a tank, **characterized in that** there is connected to the evacuation line a preferably regulatable throttle means for throttling the flow in the evacuation line, and a check valve which prevents the reflux of evacuated fluid to the minus side of the lift cylinder.

2. An arrangement according to Claim 1, **characterized in that** the evacuation line (9, 11) extends from the line (8) that connects the minus side of the lift cylinder to the hydraulic system manoeuvering valve (7) and to a return line (12) that extends from said manoeuvering valve (7), said return line being connected, in turn, to a tank included in the hydraulic system.

3. An arrangement according to Claim 2, **characterized by** a valve means (10) provided along the evacuation line (9, 11), wherein the valve means includes said regulatable throttling and check valve functions that permit fluid to flow in a direction towards the tank but prevent fluid from flowing in a direction towards the minus side of the lift cylinder.

4. An arrangement according to Claim 3, **characterized in that** the valve means (10) includes a housing which has a chamber having an inlet (9) and an outlet (11) and a valve member (13) which can be brought into engagement with the inlet so as to close the same; **in that** the housing includes an abutment means (14) that can be adjusted in a direction towards and away from the inlet; and **in that** the arrangement includes a spring (15) between the abutment means and the valve member, wherein the spring functions to bring the valve member into engagement with the inlet with a force corresponding to the spring bias in question.

## Patentansprüche

1. Vorrichtung zur Verbesserung der Dämpfung und zur Erzielung einer steuerbaren Schwebe- bzw. Betriebsstellung der Lasttragarme eines mechanischen Laders, wobei zumindest ein hydraulischer Hebezylinder (4) und ein Zylindersteuerungs-Hydrauliksystem zur Steuerung des Armes (2) imstande sind, wobei die Vorrichtung einen hydraulischen Akkumulator (6), der mit der Druckseite, der Plus-Seite (5) des Hebezylinders (4) verbunden ist, wenn eine Last gehoben wird, und eine Abführleitung aufweist, die mit der anderen Seite, der Minus-Seite (8) des Hebezylinders (4) verbunden ist zum Abführen eines Hydraulikfluids zu einem Behälter hin,
**dadurch gekennzeichnet, dass** mit der Abführleitung eine vorzugsweise regelbare Drosselungseinrichtung zur Drosselung der Strömung in der Abführleitung und ein Rückschlagventil verbunden sind, welches die Rückströmung des abgeführten Fluids zur Minus-Seite des Hebezylinders hin verhindert.

2. Vorrichtung nach Anspruch 1, **dadurch gekennzeichnet, dass** sich die Abführleitung (9, 11) von der Leitung (8) aus erstreckt, die die Minus-Seite des Hebezylinders mit dem Hydrauliksystem-Steuerventil (7) und einer Rückführleitung (12) verbindet, welche von dem Steuerventil (7) aus verläuft und welche ihrerseits mit einem in dem Hydrauliksystem enthaltenen Behälter verbunden ist.

3. Vorrichtung nach Anspruch 2, **gekennzeichnet durch** eine Ventileinrichtung (10), die längs der Abführleitung (9, 11) vorgesehen ist, wobei die Ventileinrichtung die genannten regelbaren Drosselungs- und Rückschlagventilfunktionen aufweist, die eine Fluidströmung in eine Richtung zu dem Behälter ermöglichen, jedoch eine Fluidströmung in einer Richtung zur Minus-Seite des Hebezylinders verhindern.

4. Vorrichtung nach Anspruch 3, **dadurch gekennzeichnet, dass** die Ventileinrichtung (10) ein Gehäuse, welches eine Kammer mit einem Einlaß (9) und einem Auslaß (11) enthält, und ein Ventilglied (13) aufweist, welches mit dem Einlaß derart in Eingriff gebracht werden kann, dass derselbe geschlossen ist,
dass das Gehäuse eine Anlageeinrichtung (14) aufweist, die in eine Richtung zu dem Einlaß hin und von diesem weg eingestellt werden kann,
und dass die Vorrichtung eine Feder (15) zwischen der Anlageeinrichtung und dem Ventilglied aufweist, wobei die Feder wirkt, um das Ventilglied mit dem Einlaß mit einer der in Frage stehenden Federvorspannung entsprechenden Kraft in Anlage zu bringen.

## Revendications

1. Agencement pour améliorer l'amortissement d'une position flottante pouvant être commandée de bras de support de charge d'un chargeur mécanique, et pour atteindre celle-ci, au moins un vérin de levage hydraulique (4) et un système hydraulique de manoeuvre de vérin étant adaptés pour manoeuvrer le bras (2), l'agencement comportant un accumulateur hydraulique (6) connecté au côté sous pression, le côté plus (5), du vérin de levage (4) lors du levage d'une charge, et une ligne d'évacuation étant connectée à l'autre côté, le côté moins (8), du vérin de levage (4) pour évacuer du fluide hydraulique vers un réservoir, **caractérisé en ce que** des moyens d'étranglement pouvant de préférence être régulé pour étrangler l'écoulement dans la ligne d'évacuation sont connectés à la ligne d'évacuation, ainsi qu'un clapet antiretour qui empêche le reflux de fluide évacué vers le côté moins du vérin de levage.

2. Agencement selon la revendication 1, **caractérisé en ce que** la ligne d'évacuation (9, 11) s'étend à partir de la ligne (8) qui connecte le côté moins du vérin de levage à la vanne de manoeuvre de système hydraulique (7) et à une ligne de retour (12) qui s'étend à partir de ladite vanne de manoeuvre (7), ladite ligne de retour étant connectée, à son tour, à un réservoir inclus dans le système hydraulique.

3. Agencement selon la revendication 2, **caractérisé en ce que** des moyens formant clapet (10) sont agencés le long de la ligne d'évacuation (9, 11), dans lequel les moyens formant clapet comportent lesdites fonctions d'étranglement pouvant être régulé et de clapet antiretour permettant à un fluide de s'écouler en direction du réservoir, mais empêchant le fluide de s'écouler en direction du côté moins du vérin de levage.

4. Agencement selon la revendication 3, **caractérisé en ce que** les moyens formant clapet (10) comportent un boîtier qui a une chambre ayant une entrée (9) et une sortie (11), et un élément de clapet (13) qui peut être amené en coopération avec l'entrée de manière à la fermer, **caractérisé en ce que** le boîtier comporte des moyens de butée (14) qui peuvent être ajustés dans une direction allant vers l'entrée et loin de celle-ci, et **en ce que** l'agencement comporte un ressort (15) situé entre les moyens de butée et l'élément de clapet, le ressort fonctionnant pour amener l'élément de clapet en coopération avec l'entrée à l'aide d'une force correspondant au rappel de ressort en question.
